# EUROPEAN PATENT APPLICATION

(11) **EP 2 704 491 A1**
(43) Date of publication of application: **05.03.2014**
(21) Application number: 12776868.7
(22) Date of filing: 13.04.2012
(51) Int. Cl.: H04W 48/10, H04M 3/00, H04W 48/16

(54) **BASE STATION IN MOBILE COMMUNICATION SYSTEM AND METHOD USED IN BASE STATION**

(30) Priority: 26.04.2011 JP 2011098677
(71) Applicant: NTT DOCOMO, INC., Chiyoda-ku Tokyo 100-6150 (JP)
(72) Inventor: ISHII, Minami, Tokyo 100-6150 (JP); IWAMURA, Mikio, Tokyo 100-6150 (JP); UCHIYAMA, Tadashi, Tokyo 100-6150 (JP)
(74) Representative: HOFFMANN EITLE
(86) International application number: PCT/JP2012/060184
(87) International publication number: WO 2012/147541

(57) **Abstract**

A base station in a mobile communication system includes: a system information editing unit configured to generate system information for prompting restriction of access to the own cell by a UE; a timing determination unit configured to classify a UE in a waiting state into a group of a plurality of groups based on a timing at which the UE is activated in each discontinuous reception period, and to determine a transmitting timing for transmitting a paging signal for each group; and a transmission unit configured to transmit the paging signal at the transmitting timing for a group in a first unit broadcast period so as to report, to a UE belonging to the group, that the UE receiving the paging signal should receive the system information in a second broadcast period following the first unit broadcast period, and to broadcast the system information at a predetermined timing in each of a series of unit broadcast periods.

## Description

### TECHNICAL FIELD

The present invention relates to a base station in a mobile communication system and a method used in the base station.

### BACKGROUND ART

When a cell of the mobile communication system is becoming congested, the base station can avoid the state of congestion by transferring user apparatuses in a waiting state in the cell to another cell. To transfer a user apparatus in a cell to another cell can be performed by using system information included in a broadcast signal from the base station. In this case, at least two methods can be considered.

A first method is to put a restriction on the cell. For example, state information indicating a state of the cell is included in the system information, so that the state information may indicate whether the cell is congested. The user apparatus that receives system information indicating that the cell is congested selects another cell. For a mobile communication system of the Long Term Evolution (LTE) scheme and the like, an information element of "cellBarred IE" can be used for the state information. This information element takes a value of "notBarred" when the cell is not congested, and takes a value of "Barred" when the cell is congested. Such a technique is shown in the non-patent document 1.

A second method is to use a priority of a frequency or a radio access technology (RAT). For example, system information includes information indicating a priority of a frequency or a RAT, and a frequency or a RAT of a cell that should be selected by the user apparatus can be specified by the information of the priority. For example, in a case where a priority of a frequency of another cell is set to be higher than a priority of a frequency of a residing cell of the user apparatus, the user apparatus selects the cell of the other frequency. Such a technique is described in non-patent documents 1 and 2.

### RELATED ART DOCUMENT

### [PATENT DOCUMENT]

Non-Patent Document 1: 3GPP TS36. 304 V8. 9. 0 (2010-09), sections 5. 2. 4 and 5. 3

### [NON-PATENT DOCUMENT]

Non-Patent Document 2: 3GPP TS36. 331 V8. 13. 0(2011-03), sections 6. 3. 1 and 6. 3. 4

### SUMMARY OF THE INVENTION

### PROBLEM TO BE SOLVED BY THE INVENTION

The system information is received by every user apparatus waiting in the cell. Therefore, when system information including information to prompt cell selection to another cell is broadcast, many user apparatuses that receive the system information try to select the other cell all together. In this case, there is a fear that the other cell that is the transfer destination is congested abruptly. Especially, when selecting another cell in which the radio access technology (RAT) is different, the use apparatus needs to perform attach processing and position registration and the like. Thus, in the cell of the transfer destination, signals for attach and position registration and the like occur all together, and there is a fear that a base station apparatus that accommodates the cell of the transfer destination is abruptly congested.

An object of the present invention is at least to reduce the fear that congestion occurs in a cell of a transfer destination when the base station changes system information to prompt cell selection of the user apparatus.

### MEANS FOR SOLVING THE PROBLEM

A base station according to an embodiment is a base station in a mobile communication system, including:
a system information editing unit configured to generate system information;
a timing determination unit configured to classify a user apparatus in a waiting state into a group of a plurality of groups based on a timing at which the user apparatus is activated in each discontinuous reception period, and to determine a transmitting timing for transmitting a paging signal for each group; and
a transmission unit configured to transmit the paging signal at the transmitting timing for a group in a first unit broadcast period so as to report, to a user apparatus belonging to the group, that the user apparatus receiving the paging signal should receive the system information in a second broadcast period following the first unit broadcast period, and to broadcast the system information at a predetermined timing in each of a series of unit broadcast periods.

### EFFECT OF THE PRESENT INVENTION

According to an embodiment, it is possible at least to reduce the fear that congestion occurs in a cell of a transfer destination when a base station changes system information.

### BRIEF DESCRIPTION OF THE DRAWINGS

Fig. 1 is a diagram showing an example of a situation assumed in an embodiment;
Fig. 2 is a functional block diagram of a base station used in an embodiment;
Fig. 3 is a diagram for explaining a method for grouping user apparatuses according to activation timings;
Fig. 4 is a diagram showing a situation in which system information is broadcast;
Fig. 5 shows a flowchart of an operation example performed by the base station; and
Fig. 6 is a diagram for explaining operation in detail.

### EMBODIMENTS FOR CARRYING OUT THE INVENTION

According to an embodiment, when a cell is becoming congested, a base station updates system information to be broadcast to user apparatuses so as to avoid the problem that user apparatuses operating in a waiting state in the cell access to the cell all together. Many user apparatuses in a waiting state are classified into a plurality of groups based on paging reception timing at which user apparatuses are activated in each discontinuous reception period (DRX period). Further, a paging signal indicating that system information should be received is transmitted in order for each group. Therefore, after only user apparatuses belonging to a first group receive system information in a first unit broadcast period, only user apparatuses belonging to a second group receive system information in the following second unit broadcast period. The user apparatuses belonging to the first group start operation based on updated system information. After that, the user apparatuses belonging to the second group start operation based on updated system information. Accordingly, since update report of system information is performed for each group in order, it becomes possible to effectively solve the problem in which the whole user apparatuses operate all together and the apparatus is congested. In a case where congestion starts to occur as a result that user apparatuses of the first group try to operate based on updated system information, congestion can be avoided by further subdividing the groups, for example.

An embodiment is described in terms of the following aspects.
1. System
2. Base station
3. Operation example
4. Modified example

### [Embodiment 1]

### <1. System>

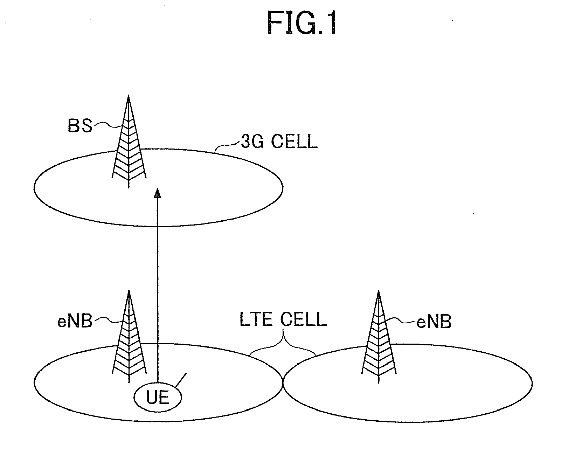

Fig. 1 is an example of a situation assumed in an embodiment. Fig. 1 shows two cells (LTE cells) in a mobile communication system of the LTE scheme, and shows a base station eNB in each of the cells. Fig. 1 also shows another cell at least a part of which geographically overlaps an LTE cell in the left side. The other cell is a cell (3G cell) of a third generation mobile communication system, for example, and also a base station BS is shown. The LTE cell in the left side is in a congestion state or is becoming in a congestion state. Therefore, the base station eNB of the LTE cell in the left side prompts the user apparatus UE to perform cell selection to select the other cell such as the 3G cell. Or, inversely, the present embodiment can be also applied for prompting cell selection from the 3G cell to the LTE cell in a case where the LTE cell returns from the congestion state to a normal state. The user apparatus UE is a mobile station typically, but, it may be a fixed terminal, as long as it can operate in any of the schemes of LTE and 3G. The user apparatus UE can be but is not limited to, a mobile telephone, an information terminal, a sophisticated mobile telephone, a smart phone, a tablet computer, a personal digital assistant, a handheld personal computer, etc. Although two cells of the 3G cell and the LTE cell are shown for the sake of convenience of drawing, any number of cells can be adopted. Also, although the LTE scheme and the third generation scheme are shown as examples, mobile communication systems of other schemes may be used.

### <2. Base station>

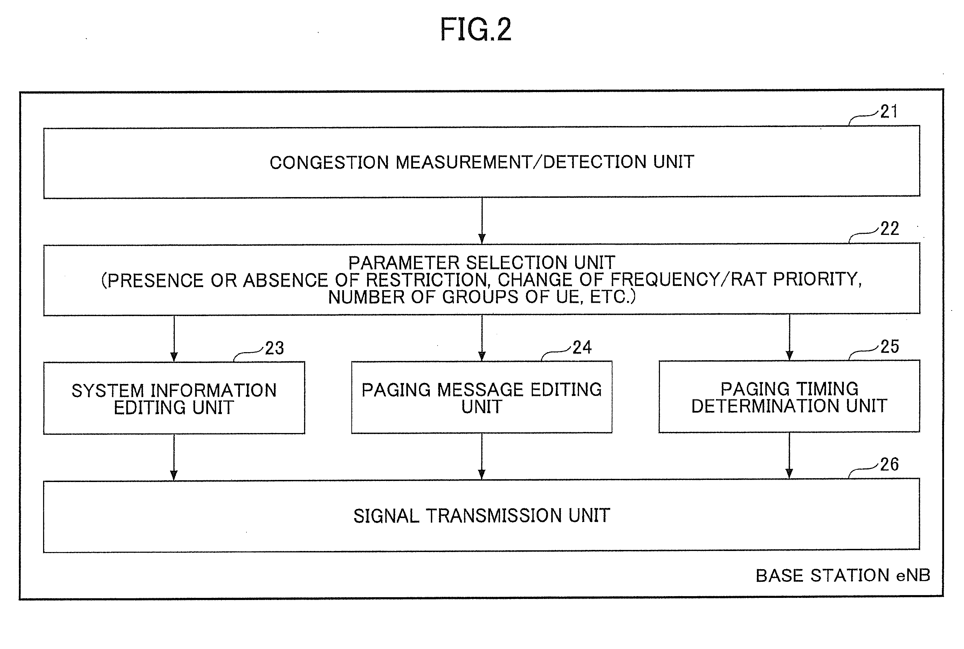

Fig. 2 shows a base station used in a situation shown in Fig. 1. Although the base station may be a base station eNB of the LTE cell or may be a base station BS of the 3G cell, the base station is one of the LTE cell for the sake of explanation. However, the present invention is not limited to this embodiment, and the present invention can be applied to any base station that tries to suppress accesses from user apparatuses of a waiting state in a cell. Fig. 2 shows functional units or processing units especially related to explanation of the embodiment among various functional units or processing units provided in the base station. The base station includes at least a congestion measurement/detection unit 21, a parameter selection unit 22, a system information editing unit 23, a paging message editing unit 24, a paging timing determination unit 25 and a signal transmission unit 26.

The congestion measurement / detection unit 21 measures or detects a congestion level of a cell. The congestion level may be measured or detected by any proper method. As an example, the congestion level is measured or detected as a CPU usage rate of the base station, a round trip delay time (RTD) of a test signal, and the like. For example, when a usage rate (CPU usage rate) of a central processing device of the base station is less than 50%, it may be determined that the cell is not congested, and when the CPU usage rate is equal to or greater than 50%, it may be determined that the cell is congested. Further, the congestion level may be represented by a binary value indicating whether the cell is congested or not, or the congestion level may be represented by a number of types or levels greater than 2. For example, the percentage of the CPU usage rate may correspond to the congestion level. The congestion measurement/detection unit 21 reports a value of the congestion level to the parameter selection unit 22.

As an example, when a congestion level of a cell that was not congested exceeds a predetermined threshold (when the cell is congested), the congestion measurement/detection unit 21 reports the event and the congestion level to the parameter selection unit 22. Or, inversely, when a congestion level of a cell that was congested becomes less than a predetermined threshold, the congestion measurement/detection unit 21 may report the event and the congestion level to the parameter selection unit 22.

The parameter selection unit 22 selects values of various parameters used in the present embodiment. More specifically, the parameter selection unit 22 selects, according to the congestion level, values of parameters indicating (a) state information indicating whether to impose restriction, (b) information of priority of frequency or RAT, and (c) group information of the user apparatus, and the like.
(a) The state information indicating whether to impose restriction may be represented by a binary value indicating whether there is congestion or not, for example. For the mobile communication system such as the LTE scheme and the like, an information element of "cellBarred IE" can be used as the state information. The information element takes a value of "notBarred" when there is no congestion, and takes a value of "Barred" when congestion occurs. The state information indicating whether to perform restriction is included in system information. The user apparatus that receives the system information indicating presence or absence of restriction operates according to the instruction of the system information. The state information may represent not only the presence or absence of restriction but also a restriction level indicating a degree of restriction. For example, in a case where a value of 70% is represented as the restriction level, that is, in a case where the state information indicates that restriction of 70% is imposed, the user apparatus that receives the state information withholds transmission of a transmission signal with a probability of 70% and transmits a transmission signal with a probability of 30% when trying to transmit a signal.
(b) The information of priority of a frequency or a RAT indicates a priority of a frequency or a RAT that the user apparatus should use. The information of the priority is included in system information. By appropriately changing the priority of the frequency or the RAT, it is possible to specify a frequency or a RAT that the user apparatus should select in cell selection. In a case where a priority of another frequency is set to be higher than a priority of a frequency of the residing cell of the user apparatus, the user apparatus selects a cell of the other frequency in cell selection.
(c) The group information of the user apparatus includes information indicating a group, among a plurality of groups, to which the user apparatus in a waiting state belongs, and includes information indicating a total number of groups. When the user apparatus is in a waiting state, the user apparatus is activated in each discontinuous reception period (DRX), receives and demodulates a control signal, and determines whether to change to a continuous reception state. If it is necessary to change the state, the user apparatus immediately changes the state, and if it is not necessary, the user apparatus remains in the waiting state, and is deactivated until next activation timing. The parameter selection unit 22 classifies a user apparatus into a group based on timing in which the user apparatus in a waiting state is activated in each discontinuous reception period (DRX period).

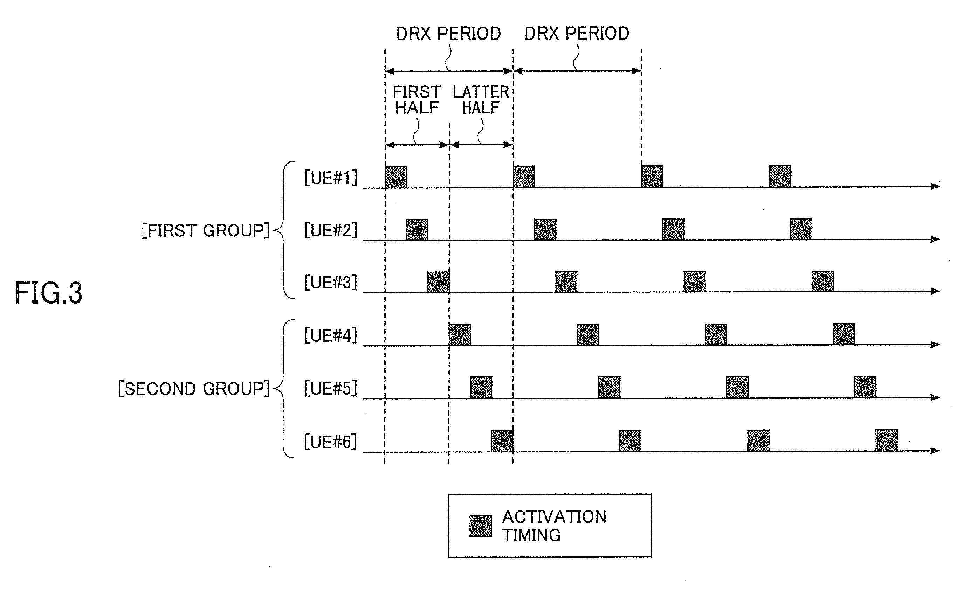

Fig. 3 shows a situation in which various user apparatuses UE#1 - UE#6 are activated in each discontinuous reception period (DRX period). These user apparatuses are activated in the same discontinuous reception period (DRX period), but, the timing of activation is different for each of the user apparatuses. Accordingly, user apparatuses in a discontinuous reception state can be classified to a plurality of groups based on the distributed timings of activation. In the case of the example shown in Fig. 3, user apparatuses UE#1, UE#2, UE#3 that are activated within a first half period of a DRX period from a reference time point that is a timing at which the first user apparatus UE#1 is activated are classified to a first group. User apparatuses UE#4, UE#5, UE#6 that are activated within a latter half period of the DRX period are classified to a second group. Accordingly, user apparatuses are classified to two groups. The number of groups to be classified may be a number greater than 2. In such a case, it is necessary to divide a DRX period into a number greater than 2. The parameter selection unit 22 of Fig. 2 determines a parameter of group information indicating how to classify user apparatuses in a waiting state into groups (method of grouping). More specifically, the parameter selection unit 22 selects or determines a value of a parameter indicating a total number of groups, a parameter indicating a group that a user apparatus in a waiting state belongs to, and the like.

The parameter selection unit 22 selects, according to the congestion level, values of parameters indicating (a) state information indicating whether to impose restriction, (b) information of priority of frequency or RAT, and (c) group information of user apparatuses, and the like. In this case, it is not essential to select both of (a) state information and (b) information of priority. The reason is that congestion can be avoided by updating any one of the pieces of system information. Therefore, when the congestion level is equal to or greater than a predetermined value, the parameter selection unit 22 determines how to avoid congestion, and selects a parameter of (a) state information and/or (b) information of priority. The parameter selected by the parameter selection unit 22 is reported to the system information editing unit 23, the paging message editing unit 24, and the paging timing determination unit 25.

The system information editing unit 23 generates or edits system information. In a case where a base station of a cell that is not congested avoids congestion, the system information editing unit 23 changes (a) state information whether to impose restriction and/or (b) information of priority of frequency or RAT. For example, state information indicating that a restriction is not imposed is changed to state information indicating that a restriction is being imposed. Or, the system information is changed such that a priority of frequency or RAT of the own cell becomes higher than a priority of frequency or RAT of another cell. The system information editing unit 23 prepares system information changed in the above-mentioned way.

Not only when a cell that is not congested is becoming congested but also when a cell that is congested becomes able to accommodate user apparatuses as usual, system information indicating state information or information of priority frequency and the like is changed. In this case, for example, state information indicating that a restriction is imposed is changed to state information indicating that a restriction is not imposed. Or, a priority of a frequency or a RAT of the own cell is changed such that the priority becomes higher than that of a frequency or a RAT of other cell.

The paging message editing unit 24 generates or edits a paging signal to be transmitted to a user apparatus in a discontinuous reception state. The paging signal is a signal for reporting, to a user apparatus, that there is an incoming call, or that system information should be received, or the like. In the present embodiment, especially, the paging signal is used for transmitting, to the user apparatus, notification information indicating that system information should be received. The system information is broadcast from a base station at a predetermined timing in each of a series of unit broadcast periods.

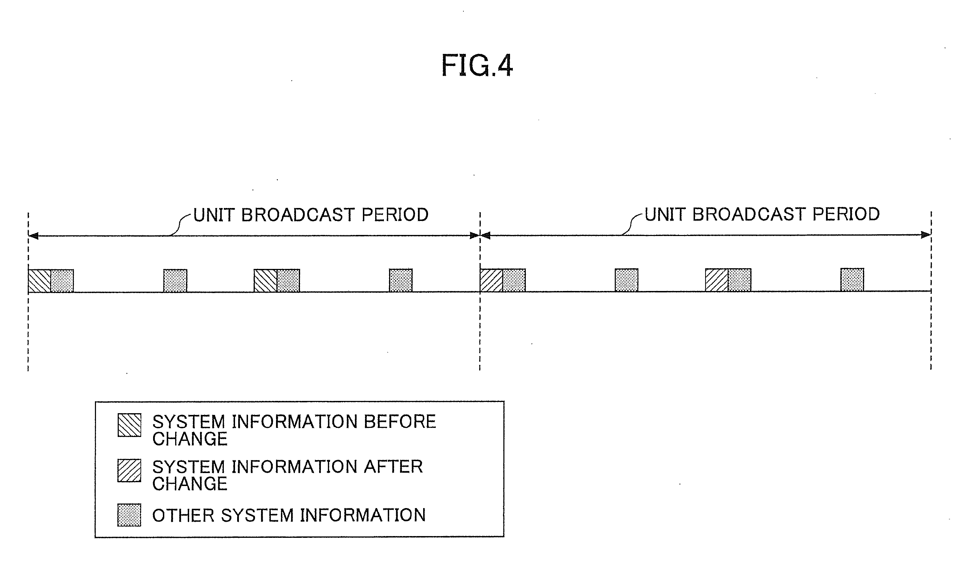

Fig. 4 schematically shows timings at which system information is broadcast. The system information is broadcast at a predetermined timing in each of a series of unit broadcast periods. The length of the unit broadcast period is uniquely determined in the system such that the length of the unit broadcast period is an integral multiple (four times, for example) of the discontinuous reception period of the user apparatus. The length of the unit broadcast period is 2560 milliseconds, for example, but is not limited to this value. A predetermined timing and a period by which the system information is broadcast is properly determined by the operator, and is broadcast to the user apparatus as a part of the system information. The system information within the unit broadcast period is changed as necessary. As mentioned above, the system information indicating state information of restrictions and information of priority of frequency and the like may be changed according to a congestion level of the cell.

The paging signal is used for prompting reception of system information changed in this way. In a unit broadcast period, when a user apparatus in a waiting state receives a paging signal at a timing of discontinuous activation, the user apparatus stays in a discontinuous reception state until the next unit broadcast period, and the user apparatus is activated from the next unit broadcast period to receive the system information. In a unit broadcast period, in a case where the user apparatus in a discontinuous reception state does not receive the paging signal, the user apparatus continues to stay in the discontinuous reception state, and it is not necessary for the user apparatus to receive the system information in the next unit broadcast period.

The paging timing determination unit 25 of Fig. 2 determines a transmitting timing (paging timing) of a paging signal such that a user apparatus belonging to a group of a plurality of groups can receive a paging signal. The parameter selection unit 22 classifies user apparatuses into groups based on timing of activation of the user apparatuses in a waiting state. Therefore, by dividing a discontinuous reception period for each group, a paging timing of each group can be determined.

In the example of Fig. 3, a first group and a second group exist, and the first group is activated in the first half of the DRX period and the second group is activated in the latter half of the DRX period. Therefore, the transmitting timing of the paging signal to be transmitted to user apparatuses belonging to the first group is determined to be the first half period of the DRX period, and the transmitting timing of the paging signal to be transmitted to user apparatuses belonging to the second group is determined to be the latter half period of the DRX period. As a result, in a case where, for example, in a first unit broadcast period, the base station transmits a paging signal only in the first half of the DRX period, only user apparatuses belonging to the first group receive the paging signal, and the user apparatuses are activated in the next second unit broadcast period to receive the system information. Since the system information includes changed system information (information indicating that a restriction is imposed, for example), the user apparatuses of the first group try to operate according to the system information. However, since user apparatuses belonging to the second group do not receive the paging signal in the first unit broadcast period, the user apparatuses do not receive the system information in the second unit broadcast period, and do not try to operate according to the system information. In the second or later unit broadcast period, the base station transmits the paging signal only in a latter half of the DRX period so that only user apparatuses belonging to the second group can receive the paging signal. Accordingly, user apparatuses belonging to the second group are activated in a third or later unit broadcast period to try to operate according to the system information.

The signal transmission unit 26 transmits general control signals and data signals, and in addition to that, especially, the signal transmission unit 26 transmits, to user apparatuses, a paging signal indicating that changed system information should be received and broadcasts the changed system information.

Although detailed operation is described later, in the present embodiment, since the user apparatuses receive system information in order for each group and try to operate according to the system information in principle, it becomes possible to effectively avoid the conventional problem in which congestion occurs since the whole user apparatuses in the waiting state try to operate according to the system information all together. But, it is not essential to cause user apparatuses to try to operate according to system information in order for each group. For example, a paging signal may be transmitted only to a particular group of a plurality of groups such that only user apparatuses of the particular group try to operate according to the system information.

In a case where user apparatuses are classified into two groups, they may be classified into the first half of the discontinuous reception period (DRX period) and the latter half of the DRX period as mentioned before, or may be classified into odd-numbered paging timing (UE#1, UE#3, UE#5 of Fig. 3) of the discontinuous reception period (DRX period) and even-numbered paging timing (UE#2, UE#4, UE#6 of Fig. 3) of the discontinuous reception period (DRX period), or may be classified in other ways.

### <3. Operation example>

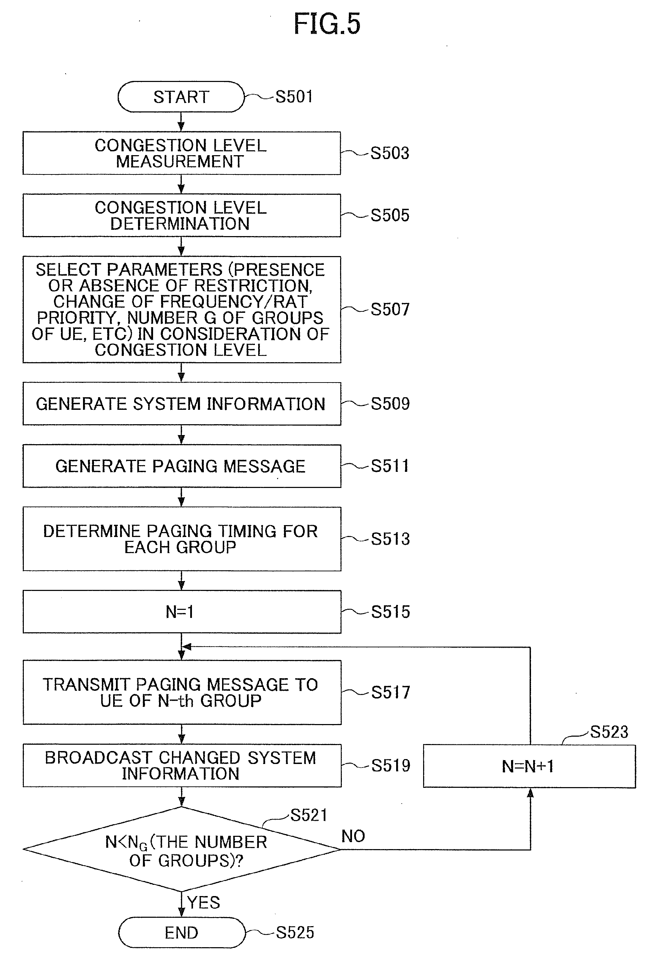

Fig. 5 shows a flowchart of an example of an operation performed by the base station shown in Fig. 2. The flow starts from step S501, and goes to step S503.

In step S503, the base station measures a congestion level of the cell by the congestion measurement/detection unit 21.

In step S505, the base station determines whether the congestion level is equal to or greater than a predetermined value. If the congestion level is equal to or greater than the predetermined value, the congestion measurement/detection unit 21 of the base station reports, to the parameter selection unit 22, that system information for avoiding congestion should be generated together with the congestion level. If the congestion level is less than the predetermined level, the congestion measurement/detection unit 21 of the base station reports, to the parameter selection unit 22, that system information for accommodating user apparatuses should be generated together with the congestion level.

In step S507, the base station sets values of various parameters into values according to the congestion level by the parameter selection unit 22. When the cell is congested, the parameter selection unit 22 determines how to avoid the congestion. More specifically, the parameter selection unit 22 selects, according to the congestion level, values of parameters indicating (a) state information indicating whether to impose a restriction, (b) information of priority of frequency or RAT, (c) group information of user apparatus and the like. In a case where the cell is not congested, the values of the parameters are not changed in principle. But, right after a state of congestion returns to a normal state, the values of the parameters are changed to values for accommodating user apparatuses as usual.

In step S509, the base station generates system information by the system information editing unit 23. System information for the case where congestion of a cell needs to be avoided is, for example, (a) state information indicating that a restriction is imposed on the cell and / or (b) information of priority of indicating that a priority of frequency or RAT of another cell is higher than that of frequency of the own cell. System information for the case where a congestion state returns to a normal state is, for example, (a) state information indicating a restriction is not imposed on the cell and / or (b) information of priority indicating that a priority of frequency or RAT of the own cell is higher than that of frequency or RAT of the other cell.

In step S511, the base station generates a paging message by the paging message editing unit 24. The paging message of this case indicates that a user apparatus in a waiting state that receives the paging message should be activated from the next unit broadcast period to receive system information.

In step S513, the base station determines transmitting timing (paging timing) for transmitting the paging signal to the user apparatus by the paging timing determination unit 25. The transmitting timing is determined according to timings at which user apparatuses classified into groups are activated.

Although the figure shows steps S509, S511 and S513 as if the steps are performed in this order for the sake of convenience of description and the drawings, this is not essential, and other order may be adopted, and all or a part of the processes of the steps may be performed at the same time.

In step S515, a parameter N specifying a number of group is set to 1. The number of groups is N_{G}>1. In the example shown in Fig. 3, N_{G}=2, and N_{G}=2 is used in this description, but, the number of groups can be determined arbitrarily.

In step S517, the base station transmits a paging signal in time with the timing at which user apparatuses belonging to the N-th group are activated.

In step S519, the base station transmits a broadcast signal including changed system information at a predetermined timing in the series of unit broadcast periods.

In step S521, it is determined whether the number N of a group is smaller than the number of groups N_{G}. If the number N of a group is smaller than the number of groups N_{G}, the flow goes to step S523, and the value of N is incremented, the flow returns to step S517, and the above-described operation is performed for another group. In a case where the number N of a group is not smaller than the number of groups N_{G}, the flow goes to step S525 and the process ends.

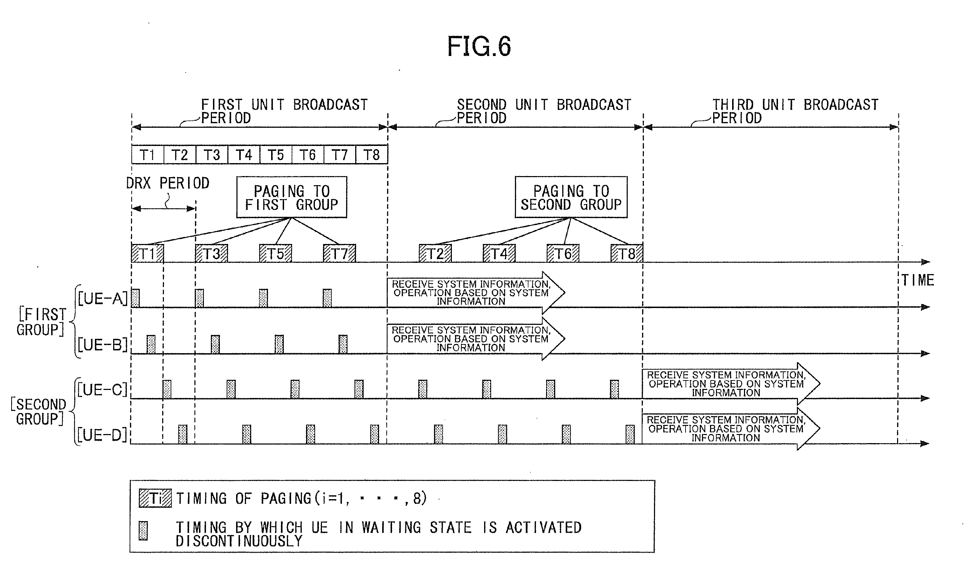

Fig. 6 is a figure for explaining operation of steps S517 and S519 shown in Fig. 5 in detail. For the sake of convenience of explanation, it is assumed that user apparatuses UE-A and UE-B belong to a first group, and user apparatuses UE-C and UE-D belong to a second group. The system information is broadcast at predetermined timing in each of the series of unit broadcast periods. For the convenience of explanation, it is assumed that the unit broadcast period is divided into eight periods of T1-T8, and that two of the eight divided periods are equal to one discontinuous period (DRX period).

First, in the first unit broadcast period, the base station transmits a paging signal in the periods of T1, T3, T5, and T7. Timing at which the user apparatuses UE-A and UE-B belonging to the first group are activated is included in each of the periods of T1, T3, T5, and T7. Timing at which the user apparatuses UE-C and UE-D belonging to the second group are activated is not included in these periods. Therefore, the paging signal transmitted in the periods of T1, T3, T5, and T7 is transmitted only to user apparatuses belonging to the first group. The user apparatuses UE-A and UE-B that receive the paging signal in the first unit broadcast period stay in the discontinuous reception state until the second unit broadcast period starts, and are activated at the time when the second unit broadcast period starts so as to receive system information. For example, since the system information includes restriction information at the cell, information indicating a priority of frequency or RAT, and the like, the user apparatuses UE-A and UE-B try to operate based on the system information.

Next, in the second unit broadcast period, the base station transmits a paging signal in the periods of T2, T4, T6, and T8. Timing at which the user apparatuses UE-C and UE-D belonging to the second group are activated is included in each of the periods of T2, T4, T6, and T8. Timing at which the user apparatuses UE-A and UE-B belonging to the first group are activated is not included in these periods. Therefore, the paging signal transmitted in the periods of T2, T4, T6, and T8 is transmitted only to user apparatuses belonging to the second group. The user apparatuses UE-C and UE-D that receive the paging signal in the second unit broadcast period stay in the discontinuous reception state until the third unit broadcast period starts, and are activated at the time when the third unit broadcast period starts so as to receive system information. For example, since the system information includes restriction information at the cell, information indicating a priority of frequency or RAT, and the like, the user apparatuses UE-C and UE-D try to operate based on the system information.

In the case of the example shown in the figure, user apparatuses belonging to the first group receive system information from the second unit broadcast period to try to operate based on system information. On the other hand, user apparatuses belonging to the second group receive system information from the third unit broadcast period to try to operate based on system information. Accordingly, in the present embodiment, the timing for receiving system information is changed for each group. Thus, it becomes possible to effectively avoid the conventional problem in which congestion occurs since the whole user apparatuses in the waiting state try to operate according to the system information all together. In a case where congestion starts to occur as a result that user apparatuses of the first group try to operate based on system information, a serious congestion state can be avoided by further subdividing the groups, for example.

### <4. Modified example>

In the above-mentioned explanation, although the number of groups for dividing the user apparatuses in the waiting state is two for the sake of convenience, the number is not limited to two, and any groups can be used in the present embodiment. For example, in the example shown in Fig. 6, in a case where each of the periods of T1-T8 is regarded as a DRX period, groups the number of which is eight or smaller can be set.

In the above explanation, although system information to be broadcast to user apparatuses of each group is the same, it is not essential. The system information for updating may be different for each group. For example, the first group may be prompted to perform sell selection to a cell of a first frequency, and the second group may be prompted to perform sell selection to a cell of a second frequency. Or, a group may be prompted to performed cell selection, and another group may not be prompted to perform cell selection. More specifically, system information indicating state information on restriction or information of priority of frequency and the like is generated for each group. In this case, since a transfer destination for transferring user apparatuses in a waiting state can be specified for each group, congestion of the own cell can be avoided while reducing effect on other cells of transfer destinations, compared with the case where only a specific cell becomes a transfer destination.

The present embodiment can be applied not only to a case where a normal state of no congestion changes toward a congested state, but also to a case where a congestion state changes to a normal state. In the former case, accesses from user apparatuses in the cell are reduced. In the latter case, accesses to the own cell are received for each group.

As described above, the present invention is described referring to specific embodiments. These embodiments are described just as examples. A person skilled in the art would easily understand various modified embodiments, amended embodiments, alternative embodiments and replacement embodiments. For example, the present invention can be applied to any kind of mobile communication systems having functions to prompt restriction of access to the own cell in order to avoid congestion.

For example, the present invention may be applied to systems of W-CDMA scheme, W-CDMA systems of the HSDPA/HSUPA scheme, systems of the LTE scheme, systems of the LTE-Advanced scheme, systems of the IMT-Advanced scheme, WiMAX, Wi-Fi scheme systems and the like. While specific numerical value examples are used to facilitate understanding of the present invention, such numerical values are merely examples, and any appropriate value may be used unless specified otherwise. Specific mathematical expressions are used in the present embodiments for the sake of easy understanding, but are used just as examples. Any kind of mathematical expressions, unless otherwise noted, can be used.

Classification into each embodiment or item in the description is not essential in the present invention, and features described in two or more items may be combined and used as necessary. Subject matter described in an item may be applied to subject matter described in another item (provided that they do not contradict). For convenience of explanation, the apparatus according to the embodiment of the present invention has been explained by using a functional block diagram. However, the apparatus may be implemented in hardware, software, or a combination thereof. The software may be stored in any proper storage medium such as a RAM (Random Access Memory), a flash memory, a ROM (Read Only Memory), an EPROM(Erasable Programmable ROM), an EEPROM(Electronically Erasable and Programmable ROM), a register, a hard disk (HDD), a removable disk, a CD-ROM, database, server and the like.

Therefore, the present invention is not limited to the above-mentioned embodiment and is intended to include various variations, modifications, alterations, substitutions and so on without departing from the spirit of the present invention.

The present international application claims priority based on Japanese patent application No. 2011-098677, filed in the JPO on April 26, 2011, and the entire contents of the Japanese patent application No. 2011-098677 are incorporated herein by reference.

### DESCRIPTION OF REFERENCE SIGNS

- 21: congestion measurement/detection unit
- 22: parameter selection unit
- 23: system information editing unit
- 24: paging message editing unit
- 25: paging timing determination unit
- 26: signal transmission unit
- eNB: LTE base station
- BS: 3G base station
- UE: user apparatus

## Claims

1. A base station in a mobile communication system, comprising:
a system information editing unit configured to generate system information;
a timing determination unit configured to classify a user apparatus in a waiting state into a group of a plurality of groups based on a timing at which the user apparatus is activated in each discontinuous reception period, and to determine a transmitting timing for transmitting a paging signal for each group; and
a transmission unit configured to transmit the paging signal at the transmitting timing for a group in a first unit broadcast period so as to report, to a user apparatus belonging to the group, that the user apparatus receiving the paging signal should receive the system information in a second broadcast period following the first unit broadcast period, and to broadcast the system information at a predetermined timing in each of a series of unit broadcast periods.

2. The base station as claimed in claim 1, further comprising a measurement unit configured to measure a congestion level of a cell of the base station, wherein
when the congestion level that is measured exceeds a predetermined level, the system information editing unit updates the system information.

3. The base station as claimed in claim 2, wherein the system information indicates that a restriction is imposed on the cell, or that a priority of another frequency is higher than that of a frequency of the cell of the base station.

4. The base station as claimed in claim 3, wherein operation prompted by the system information is determined for each group.

5. The base station as claimed in claim 1, wherein a radio access technology of a priority reported by the system information is different from that used in the base station.

6. The base station as claimed in claim 1, wherein the unit broadcast period is equal to a period including one or more discontinuous reception periods.

7. A method for use in a base station comprising the steps of:
generating system information;
classifying a user apparatus in a waiting state into a group of a plurality of groups based on a timing at which the user apparatus in the waiting state is activated in each discontinuous reception period, and determining a transmitting timing for transmitting a paging signal for each group; and
transmitting the paging signal at the transmitting timing for a group in a first unit broadcast period so as to report, to a user apparatus belonging to the group, that the user apparatus receiving the paging signal should receive the system information in a second broadcast period following the first unit broadcast period, and broadcasting the system information at a predetermined timing in each of a series of unit broadcast periods.
